## Europäisches Patentamt
## European Patent Office
## Office européen des brevets

(19)

(11) Veröffentlichungsnummer: **0 036 107**
**B1**

(12) **EUROPÄISCHE PATENTSCHRIFT**

(45) Veröffentlichungstag der Patentschrift:
13.08.86

(21) Anmeldenummer: **81101292.1**

(22) Anmeldetag: **23.02.81**

(51) Int. Cl.⁴: **C 08 F 255/02,** C 08 F 263/02 //
(C08F255/02, 212:02, 220:42),
(C08F263/02, 212:02, 220:42)

(54) **Verfahren zur Herstellung von vernetzten Pfropfcopolymerisaten.**

(30) Priorität: **07.03.80 DE 3008747**

(43) Veröffentlichungstag der Anmeldung:
**23.09.81 Patentblatt 81/38**

(45) Bekanntmachung des Hinweises auf die Patenterteilung:
**13.08.86 Patentblatt 86/33**

(84) Benannte Vertragsstaaten:
**DE FR GB IT**

(56) Entgegenhaltungen:
**EP-A-0 004 284**
**DE-A-2 305 681**
**FR-A-2 179 779**

**CHEMICAL ABSTRACTS, Band 77, Nr. 2, 10. Juli
1972, Seite 46, Nr. 6397w Columbus, Ohio, U.S.A.**

**Die Akte enthält technische Angaben, die nach
dem Eingang der Anmeldung eingereicht wurden
und die nicht in dieser Patentschrift enthalten sind.**

(73) Patentinhaber: **BAYER AG, Konzernverwaltung RP
Patentabteilung, D-5090 Leverkusen 1 Bayerwerk
(DE)**

(72) Erfinder: **Steffen, Ulrich, Dr., Im Daubenthal 8,
D-4047 Dormagen (DE)**
Erfinder: **Alberts, Heinrich, Dr., Morgengraben 16,
D-5000 Köln 80 (DE)**
Erfinder: **Morbitzer, Leo, Dr., Rungestrasse 50,
D-5000 Köln 80 (DE)**

## Beschreibung

Die vorliegende Erfindung betrifft ein Verfahren zur Herstellung von vernetzten Pfropfcopolymerisaten aus Ethylen-Vinylester-Copolymeren, Monovinylaromaten und (Meth)-Acrylnitril durch Fällungspolymerisation, wobei während der Pfropfpolymerisation in Gegenwart eines Vernetzungsmittels nicht nur das gebildete vernetzte Pfropfcopolymerisat sondern auch, durch Zugabe eines Fällungsmittels, das gelöste, nicht umgesetzte Pfropfsubstrat ausgefällt wird.

Gegenüber der Polymerisation in Masse, hat die Fällungscopclymerisation in organischen Medien einige verfahrenstechnische Vorteile wie niedrige Viskosität und gute Wärmeabfuhr, gegenüber der Emulsions- oder Suspensionspolymerisation den Vorteil der geringeren Abwasserbelastung, da keine Emulgatoren benötigt werden und eingesetzte hochmolekulare Dispergatoren zum größten Teil im Polymerisat verbleiben.

Bei der Pfropfung durch Fällungspolymerisation wird das Pfropfsubstrat in einem Lösungsmittel gelöst, welches für das sich bildende Pfropfpolymerisat ein Fällungsmittel darstellt. Aus den DE-OS 2 215 588, 2 509 403 und 2 656 228 ist es beispielsweise bekannt, die Pfropfung von Styrol oder Styrol-Acrylnitril-Gemischen auf Ethylen-Vinylester-Copolymere mit einem Vinylestergehalt zwischen 30 und 80 Gew.-% in tert.-Butanol als Lösungs-Fällungsmittel durchzuführen. Weiterhin ist aus der EP-A-0 004 284 und der DE-A-2 305 681 bekannt, solche Pfropfcopolymerisate durch radikalisch initiierte Copolymerisation herzustellen.

Das sich bildende Styrol-Acrylnitril-Copolymerisat und das Ethylen-Vinylester-Styrol-Acrvlnitril-Pfropfcopolymerisat fallen als feinteilige Dispersion an mit Partikelgrößen zwischen 0,1 und 2μm. Die ungepfropften Anteile des Ethylen-Vinylester-Copolymerisates verbleiben jedoch in Lösung und führen bei einem Feststoffgehalt > 30 Gew.-% zu einer hohen Viskosität und schlechten Durchmischung des Polymerisationsansatzes. Wird diese Dispersion durch Fällung in heißem Wasser und Strippen mit Dampf aufgearbeitet, dann erhält man infolge der gelösten Pfropfsubstratanteile ein grobteiliges Produkt. Dies ist für die Trochnung und nachträgliche Verarbeitung wie Abmischen und Granulieren von Nachteil. Diese Dispersionen führen auch bei der Schneckenausdampfung zur Schaumbildung und zu Ablagerungen in den Ausdampfgehäusen.

Es wurde nun gefunden, daß die vorerwähnten Nachteile der herkömmlichen Fällungspolymerisation überwunden werden, wenn während der Pfropfcopolymerisation das gelöste Pfropfsubstrat durch Zugabe eines Fällungsmittels ebenfalls ausgefällt wird. Um die gewünschten vernetzten Produkte zu erhalten, werden dem Gemisch der Pfropfmonomeren geeignéte Vernetzungsmittel zugesetzt.

Gegenstand der Erfindung ist ein Verfahren zur Herstellung von vernetzten Pfropfcopolymerisaten durch radikalisch initiierte Fällungscopolymerisation von

A) 10-80, vorzugsweise 16-60 Gew.-% eines Ethylen-Vinylester-Copolymeren als Pfropfsubstrat und

B) 90-20, vo zugsweise wenigstens 40 Gew.-% eines aufzupfropfenden Momomer - Gemisches von

I. 94-15, vorzugsweise 93,9-48 Gew.-% eines oder mehrerer Monovinylaromaten

II. 5-50, vorzugsweise 5-30 Gew.-% Acrylnitril und/oder Methacrylnitril,

III. 1-20, vorzugsweise 1-10 Gew.-% eines zwei oder mehr C-C-Doppelbindungen enthaltenden Vernetzungsmittels und

IV. 0-15, vorzugsweise 0,1-12 Gew.-% eines weiteren monoolefinisch ungesättigten copolymerisierbaren Monomeren,

wobei die Summe von A und B und I-IV jeweils 100 Gew.-% beträgt, dadurch gekennzeichnet, daß gleichzeitig mit dem ausfallenden vernetzten Pfropfcopolymerisat das gelöste nicht gepfropfte Substrat durch Zugabe eines Fällungsmittels ausgefällt wird.

Zur Durchführung des erfindungsgemäßen Verfahrens wird das Ethylen-Vinylester-Copolymerisat gelöst. Als Lösungsmittel eignen sich verzweigte und geradkettige $C_4$-$C_8$-Monoalkohole sowie cycloaliphatische und aromatische, gegebenenfalls halogenierte Kohlenwasserstoffe. Bevorzugt wird tert.-Butanol eingesetz.

Durch Zugabe der Monomeren, eines Vernetzungsmittels und eines radikalischen Initiators wird die Pfropfcopolymerisation gestartet. Zur gleichen Zeit wird langsam ein Fällungsmittel für das Ethylen-Vinylester-Copolymerisat zugegeben. Dazu eignen sich Wasser und $C_1$-$C_3$-Alkohole; vorzugsweise wird Wasser eingesetzt. Während und nach dem Fällvorgang wird die Zugabe der Monomeren und des Initiators fortgeführt und nach beendeter Zugabe bis zum völligen Verbrauch des Initiators auspolymerisiert.

Der Feststoffgehalt der entstehenden, gut fließenden Dispersion kann dabei 40-45 Gew.-% erreichen.

Die Aufarbeitung der Dispersion und Abtrennung der Polymerisate kann nach üblichen Verfahren erfolgen. Das Strippen mit Wasserdampf liefert feinpulvrige Pfropfcopolymerisate mit niedrigen Restmonomer- und Lösungsmittelgehalten. Nach der Trocknung haben die Partikel eine Größe bis 1 mm Durchmesser.

Eine Schneckenausdampfung führt zu weißem, glänzendem Granulat mit ebenfalls niedrigem Restmonomergehalt. Eine Schaumbildung tritt nicht mehr auf, so daß die Ausdampfung über einen längeren Zeitraum störungsfrei betrieben werden kann.

Als Pfropfsubstrate werden Ethylen-Vinylester-CoPolymere mit 25 bis 75 Gew.-%, vorzugsweise 35-50 Gew.-% einpolymerisierten Vinylestern eingesetzt. Geeignet sind Vinylester von $C_1$-$C_{18}$-

Monocarbonsäuren, vorzugsweise Vinylacetat. Die Ethylen-Vinylester-Copolymeren haben i.a. Mooneyviskositäten ML 4/100°C, gemessen nach DIN 53 523, von 15-80, bevorzugt von 20-45 und Grenzviskositäten η von 0,5 bis 1,8 [dl/g] gemessen in THF. Diese CoPolymeren sind in Kohlenwasserstoffen und in Alkoholen, bevorzugt in tert.-Butanol löslich.

Als aufzupfropfende Monomere werden (Meth)-Acrylnitril, Styro1, α-Methyl-Styrol und kernsubstituierte Styrole wie Halogen- und Alkylstyrole mit 1 bis 4 C-Atomen im Alkylrest eingesetzt. Bevorzugt sind Styrol und Acrylnitril. Gegebenenfalls können weitere monoolefinische ungesättigte copolymerisierbare, pfropfaktive Monomere wie Vinylchlorid, (Meth)-Acrylsäure,-(Meth)-Acrylsäureester mit 1 bis 22 C-Atomen im Alkylrest, (Meth)-Acrylamid, α-Olefine mit 2 bis 18 C-Atomen und Allylverbindungen wie Diallylcarbonat, 1-Buten-3, 4-diol, 2-Methylen-1, 3-dihydroxypropan und 2-Methylen-1, 3-diacetoxipropan eingesetzt werden. Diese Monomeren werden auch als Pfropfaktivatoren bezeichnet.

Geeignete Vernetzungsmittel sind Divinylaromaten, Divinylether, Divinylester von $C_2$-$C_{10}$-Dicarbonsäuren, Diallyl- und Trialiylether und -ester, Ester von Diolen mit $\alpha,\beta$-ungesättigten $C_3$-$C_{10}$-Monocarbonsäuren sowie ungesättigte Polyester. Beispielhaft seien genannt: Divinylbenzol, Butandioldiacrylat. Glykoldivinylether, Divinyladipat, Allylvinylether, Diallylfumarat, Triallylcyanurat und Trimethylolpropantriallylether.

Die ungesättigten Polyester werden nach bekannten Verfahren durch Polykondensation mindestens einer α, β-ethylenisch ungesättigten Dicarbonsäure oder deren esterbildenden Derivate, gegebenenfalls in Abmischung mit bis zu 90 Mol.-%, bezogen auf die ungesättigte Säurekomponente, mindestens einer gesättigten Dicarbonsäure oder deren esterbildenden Derivaten mit mindestens einem zweiwertigen Alkohol hergestellt. Beispiele für bevorzugt zu verwendende ungesätttige Dicarbonsäuren und ihre Derivate sind Maleinsäure, Maleinsäureanhydrid und Fumarsäure. Als gesättigte Dicarbonsäuren oder deren Derivate können Phthalsäure, Phthalsäureanhydrid, Isophthalsäure, Bernstein-, Adipin- und Sebacinsäure eingesetzt werden.

Als zweiwertige Alkohole kommen beispielsweise Ethylen-5 glykol, Propandiol-1, 2, Propandiol-1, 3, Diethylenglykol, Butandiol-1, 3, Butandiol-1, 4, Neopentylglykol und Hexan-diol-1, 6 in Frage.

Die vorzugsweise zu verwendenden ungesättigten Polyester sind aus Maleinsäure, das bis zu 25 Mol-% durch Phthalsäure oder IsoPhthalsäure ersetzt sein kann, und Ethylenglykol, Propandiol-1,2, Diethylenglykol und Dipropylenglykol aufgebaut.

Die Säurezahlen der Polyester liegen zwischen 1 und 50, vorzugsweise zwischen 5 und 25, ihre Hydroxyl-Zahlen zwischen 1 und 100, vorzugsweise zwischen 20 und 50; ihre Molgewichte liegen bevorzugt zwischen 700 und 3000.

Die ungesättigten Polyester haben gegenüber den niedermolekularen Vernetzern den Vorteil, daß sie mit dem Ethylen-Vinylester-Copolymeren ausgefällt werden und somit im dispergierten Partikel zu einer hohen Vernetzungsdichte führen. Die Menge des eingesetzten Vernetzungsmittels kann 1 bis 20 Gew.-%, bevorzugt 1 bis 10 Gew.-%, bezogen auf die gesamten Monomeren, betragen.

Die Pfropfcopolymerisation kann durch Bestrahlung oder radikalliefernde Initiatoren ausgelöst werden. Als Polymerisationsinitiatoren eignen sich Azoverbindungen wie Azobisisobuttersäurenitril und insbesondere Perverbindungen wie Isopropylperoxydicarbonat, α-Ethylhexyi-Peroxidicarbonat, Cyclohexylperoxidicarbonat, tert.-Butylperpivalat, tert.-Butyperoctoat, tert.-Butyl-per-neodekanoat, Diacetylperoxid, LauroylPeroxid, Succinylperoxid und Dibenzoylperoxid.

Die Initiatorkonzentration kann 0,1 bis 1,0 Gew.-; bevorzugt 0,3 bis 0,5 Gew.-% betragen, bezogen auf das eingesetzte Monomerengemisch. Die Pfropfpolymerisation kann je nach verwendeten Initiatoren bei Temperaturen zwischen 40° und 250°C, bevorzugt zwischen 60° und 120°C durchgeführt werden.

Bei der Pfropfcopolymerisation nach dem erfindungsgemäßen Verfahren kann im allgemeinen auf die Verwendung von Dispergatoren verzichtet werden, da die Ethylen-Vinylester-Copolymeren selbst als Dispergatoren wirken. Der zusätzliche Einsatz eines weiteren Dispergators bewirkt eine Verkleinerung der partikelgrößen und nach Beendigung der Pfropfsubstratfällung eine Erhöhung der Polymerisationsgeschwindigkeit und des Monomerenumsatzes.

Als Dispergatoren seien Polyvinylalkohol, teilverseiftes Polyvinylacetat, Cellulosederivate wie Methyloder β-Hydroxyethyl-Cellulose, Styrol-Acrylsäure- oder verseifte Styrol-Maleinsäureanhydrid-Copolymerisate, Methacrvlsäure-Methylmethacrylat-Copolymere, Polyethylenoxid, Polyacrylamid oder Polyacrylsäure beispielhaft erwähnt.

Die Menge der eingesetzten Dispergatoren beträgt 0,01-3 Gew.-%, bevorzugt 0,1-1,0 Gew.-%, bezogen auf die eingesetzte flüssige Phase.

Die nach dem erfindungsgemäßen Verfahren hergestellten feinteiligen vernetzten Pfropfcopolymerisate sind in Toluol oder THF nicht löslich sondern werden lediglich angequollen. Die Quellungsfaktoren in THF bei 25°C liegen zwischen 5 und 50 je nach eingesetzter Vernetzermenge.

In diesen Pfropfcopolymerisaten ist das Substrat weitgehend gepfropft und damit vernetzt. Aus den Produkten können durch erschöpfende Extraktion mit tert.-Butanol bei 80°C lediglich 15-25 % des eingesetzten Ethylen-Vinylester-Copolymerisates extrahiert werden. Dabei handelt es sich vornehmlich um niedermolekulare Anteile, die sich einer Pfropfung und Vernetzung entziehen. Aus Produkten, die ohne Verwendung von Vernetzern hergestellt werden, können dagegen 30-50 % an nicht umgesetztem Pfropfsubstrat extrahiert werden.

Die nach dem erfindungsgemäßen Verfahren hergestellten Pfropfcopolymerisate mit Pfropfsubstratgehalten von 40-60 Gew.-% eignen sich als bewitterungsstabile Schlagfestmodifikatoren für Harze mit geringer Zähigkeit. Die Abmischungen mit solchen Harzen lassen sich in Knetern und Extrudern im Temperaturbereich zwischen 180 und 280°C verarbeiten. Die Schmelzviskosität unterscheidet sich kaum von der der reinen Harze. Extrudierte oder gespritzte Formstücke zeigen einen hohen Oberflächenglanz.

Die folgenden Beispiele erläutern die Erfindung. Prozentangaben sind stets Gew.-%.

**Beispiel 1**

In einen 40-1-Autoklaven werden 3300 g Ethylen-Vinylacetat-Copolymer (EVA) mit 45 Gew.-% einpolymerisiertem Vinylacetat und einer Mooney-Viskosität von 20 in 10 200 g tert.-Butanol und 2000 g Wasser bei 85°C gelöst. Danach wird eine Mischung aus 2920 g Styrol, 1080 g Acrylnitril, 400 g n-Butylacrylat, 80 g Divinylbenzol und 100 g eines Polyethylenoxids mit einem Molgewicht von 20 000 eingepumpt und die Temperatur auf 85°C eingestellt. Dann werden 30 % einer Lösung aus 20 g tert.-Butylperpivalat, 20 g Wasser und 200 g tert.-Butanol sofort und der Rest in 1 h eingepumpt. Gleichzeitig wird mit der Zudosierung von 5000 g Wasser begonnen. Die PumPzeit beträgt 1,5 h. Es wird bis zum völligen Verbrauch des Initiators 2 Stunden auspolymerisiert. Es wird eine feinteilige Dispersion mit einem Feststoffgehalt von 20,1 Gew.-% erhalten. Nach Aufarbeitung in heißem Wasser und Trocknung erhält man 6 500 g eines feinpulvrigen Pfropfcopolymerisates mit einem EVA-Gehalt von 45,5 Gew.-%. Der Gelgehalt in Tetrahydrofuran beträgt 72 Gew.-%.

**Beispiel 2**

In einem 40 1-Autoklaven werden 3 300 g EVA wie in Beispiel 1 angegeben gelöst. Zu dieser Lösung werden 2920 g Styrol, 1180 g Acrylnitril, 80 g Butylacrylat, 100 g eines Polyethylenoxids mit einem Molgewicht von 20 000 und 500 g einer 60 %igen Lösung eines ungesättigten Polyesters bestehend aus Maleinsäure, Prolandiol und Phthalsäure in Styrol gegeben. Anschließend werden 100 g Propylen als Pfropfaktivator eingedrückt. Die Pfropfpolymerisation wird bei 90°C durch Zupumpen einer Lösung aus 20 g Benzoylperoxid, 500 g tert.-Butanol und 400 g Styrol gestartet. Gleichzeitig wird mit der zweistündigen Zudosierung von 5000 g Wasser begonnen. Danach wird bis zum völligen Verbrauch des Initiators 2,5 h bei 80°C auspolymerisiert. Es wird eine feinteilige Dispersion mit einem Feststoffgehalt von 29 Gew.-% erhalten. Nach Ausfällung des Polymerisats mit Ethanol und Trccknung bei 60°C wird ein feinpulvriges Pfropfcopolymerisat mit einem EVA-Gehalt von 61,5 Gew.-% erhalten. Der Gelgehalt des Pfropfcopolymerisates in THF beträgt 79 Gew.-%.

**Patentansprüche**

1. Verfahren zur Herstellung von vernetzten Pfropfcopolymerisaten durch radikalisch initiierte Fällungscopolymerisation von

A) 10-80 Gew.-% eines Ethylen-Vinylester-Copolymeren als Pfropfsubstrat und

B) 90-20 Gew.-% eines aufzupfropfenden Monomer-Gemisches von

I. - 94-15 Gew.-% eines oder mehrerer Monovinylaromaten,

II. 5-50 Gew.-% Acrylnitril und/oder Methacrylnitril,

III. 1-20 Gew.-% eines zwei oder mehr C-C-Doppelbindungen enthaltenden Vernetzungsmittels und

IV. 0-15 Gew.-% eines weiteren monoolefinisch ungesättigten copolymerisierbaren Monomeren,

wobei die Summe von A und B und I-IV jeweils 100 Gew.-% beträgt, dadurch gekennzeichnet, daß gleichzeitig mit dem ausfallenden vernetzten Pfropfcopolymerisat das gelöste nicht gepfropfte Substrat durch Zugabe eines Fällungsmittels ausgefällt wird.

2. Verfahren nach Anspruch 1, dadurch gekennzeichnet, daß das aufzupfropfende Gemisch B aus

I. 93,9-48 Gew.-% Styrol

II. 5-30 Gew.-% Acrylnitril

III. 1-10 Gew.-% eines zwei oder mehr C-C-Doppelbindungen enthaltenden Vernetzungsmittels und

IV. 0,1-12 Gew.-% eines weiteren monoolefinisch ungesättigten copolymerisierbaren Monomeren besteht,

wobei die Summe von I-IV 100 Gew.-% beträgt.

3. Verfahren nach Anspruch 1 und 2, dadurch gekennzeichnet, daß das nicht gepfropfte Substrat während der Pfropfcopolymerisation durch Zugabe von Wasser, Methanol oder Ethanol ausgefällt wird.

4. Verfahren nach Anspruch 1 bis 3, dadurch gekennzeichnet, daß als Vernetzungsmittel III Divinylaromaten, Divinylether, Divinylester von $C_2$-$C_{10}$-Dicar-bonsäuren, Diallyl- und Triallyiether und -ester und Ester von Diolen mit $\alpha$, $\beta$-ungesättigten $C_3$-$C_{10}$-Monocarbonsäuren eingesetzt werden.

5. Verfahren nach Anspruch 1 bis 3, dadurch gekennzeichnet, daß als Vernetzungsmittel III Polyester von Diolen mit $\alpha$, $\beta$-ungesättigten Dicarbonsäuren eingesetzt werden.

Verfahren nach Anspruch 1 bis 3, dadurch gekennzeichnet, daß als copolymerisierbare Monomere IV Vinylchlorid, α-Olefine mit 2-18 C-Atomen, (Meth)-Acrylsaure sowie deren Amide und $C_1$-$C_{22}$-Alkylester, Diallylcarbonat, 1-Buten-3,4-diol, 2-Methylen-1, 3-Dihydroxy-und 1, 3-Diacetoxypropan eingesetzt werden.

## Claims

Process for the production of cross-linked graft copolymers by the radically initiated precipitation copolymerisation of
A) 10-80% by weight of an ethylene/vinyl ester copolymer as the graft substrate and
B) 90-20% by weight of a monomer mixture to be grafted on, of
I. 90-15% by weight of one or more monovinyl aromatics,
II. 5-50% by weight of acrylonitrile and/or methacrylonitrile,
III. 1-20% by weight of a cross-linking agent containing two or more C-C double bonds and
IV. 0-15% by weight of another monoolefinically unsaturated copolymerisable monomer,
the sum of A and B and I-IV being in each case 100% by weight, characterised in that simultameously with the precipitating cross-linked graft copolymer the dissolved non-grafted substrate is precipitated by adding a precipitating agent.
2. Process according to Claim 1, characterised in that the mixture B to be grafted on consists of
I. 93.9-48% by weight of styrene,
II. 5-30% by weight of acrylonitrile,
III. 1-10% by weight of a cross-linking agent containing two or more C-C double bonds and
IV. 0.1-12% by weight of another monoolefinically unsaturated copolymerisable monomer,
the sum of I-IV being 100% by weight.
3. Process according to Claim 1 and 2, characterised in that the non-grafted substrate is precipitated during the graft copolymerisation by the addition of water, methanol or ethanol.
4. Process according to Claim 1 to 3, characterised in that divinyl aromatics, divinyl ethers, divinyl esters of C -C dicarboxylic acids, diallyl and triallyl ethers and esters and esters of diols with α, β-unsaturated $C_3$-$C_{10}$ monocarboxylic acids are used as the cross-linking agent III.
5. Process according to Claim 1 to 3, characterised in that polyesters of diols with α, β-unsaturated dicarboxylic acids are used as the cross-linking agent III.
6. Process according to Claim 1 to 3, characterised in that vinyl chloride, α-olefins having 2-18 C atoms, (meth)acrylic acid and its amides and $C_1$-$C_{22}$-alkyl esters, diallyl carbonate, 1-butene-3, 4-diol, 2-methylene-1, 3-dihydroxy-and 1, 3-diacetoxy-propane are used as the copolymarisable monomers IV.

## Revendications

1. Procédé de préparation de copolymères greffés réticulés par copolymèrisation radicalaire avec précipitation de:
A) 10 à 80 % en poids d'un copolymére éthylène-ester vinylique qui sert de support de greffage, et
B) 90 à 20 % en poids d'un mélange de monomères à greffer consistant en:
I. 94 à 15 % en poids d'un ou plusieurs composés monovinylaromatiques,
II. 5 à 50 % en poids d'acrylonitrile et/ou de méthacrylonitrile,
III. 1 à 20 % en poids d'un agent réticulant contenant deux doubles liaisons C-C ou plus, et
IV. 0 à 15 % en poids d'un autre monomère copolymérisable à insaturation mono-oléfinique,
les sommes de A et B et de I à IV étant chacune de 100 % en poids, caractérisé en ce que, en même temps que le copolymère greffé réticulé qui précipite, on précipite le support non greffé, dissous, par addition d'un agent précipitant.
2. Procédé selon la revendication 1, caractérisé en ce que le mélange B à greffer consiste en:
I. 93,9 à 48 % en poids de styrène,
II. 5 à 30 % en poids d'acrylonitrile,
III. 1 à 10 % d'un agent réticulant contenant deux doubles liaisons C-C ou plus, et
IV. 0,1 à 12 % en poids d'un autre monomère copolymérisable à insaturation mono-oléfinique,
la somme de I à IV étant de 100 % en poids.
3. Procédé selon les revendications 1 et 2, caractérisé en ce que le support non greffé est précipité pendant la copolymérisation greffée par addition d'eau, de méthanol ou d'éthanol.
4. Procédé selon les revendications 1 à 3, caractérisé en ce que l'on utilise en tant qu'agents réticulants III des composés divinylaromatiques, des éthers divinyliques, des esters divinyliques d'acides dicarboxyliques en $C_2$-$C_{10}$, des esters et éthers diallyliques et triallyliques et des esters de diols et d'acides monocarboxyliques alpha, bêta insaturés en $C_3$-$C_{10}$.
5. Procédé selon les revendications 1 à 3, caractérisé en ce que l'on utilise en tant qu'agents réticulants III des polyesters de diols et d'acides dicarboxyliques alpha,bêta insaturés.
6. Procédé selon les revendications 1 à 3, caractérisé en ce que l'on utilise en tant que monomères copolymérisables IV du chlorure de vinyle, des alpha-oléfines en $C_2$-$C_{18}$, de l'acide (méth)acrylique et ses amides et esters alkyliques en $C_1$-$C_{22}$, du carbonate de diallyle, du 1-butène-3, 4-diol, du 2-méthylène-1, 3-dihydroxy- et du 1, 3-diacétoxy-propane.